# EUROPÄISCHE PATENTANMELDUNG

(11) **EP 2 570 219 A2**
(43) Veröffentlichungstag der Anmeldung: **20.03.2013**
(21) Anmeldenummer: 12006328.4
(22) Anmeldetag: 07.09.2012
(51) Int. Cl.: B23F 23/12

(54) **Innenverzahnungsschleifmaschine**

(30) Priorität: 15.09.2011 DE 102011113489
(71) Anmelder: LIEBHERR-VERZAHNTECHNIK GmbH, 87437 Kempten (DE)
(72) Erfinder: Hörner, Christian, 87452 Altusried (DE)
(74) Vertreter: Laufhütte, Dieter

(57) **Zusammenfassung**

Die vorliegende Erfindung betrifft eine Innenverzahnungsschleifmaschine mit einem Schleifarm (1), an welchem eine Schleifspindel (2) angeordnet ist, und mit einer verstellbaren Kühlmitteldüse (4), wobei die Kühlmitteldüse (4) über einen Antrieb verstellbar ist.

## Beschreibung

Die vorliegende Erfindung betrifft eine Innenverzahnungsschleifmaschine mit einem Schleifarm, an welchem eine Schleifspindel angeordnet ist, und mit einer verstellbaren Kühlmitteldüse.

Um beim Verzahnungsschleifen das Kühlschmiermittel in die Bearbeitungszone zu bringen, werden Kühlmitteldüsen eingesetzt, über welche das Kühlmittel in den Eingriffbereich der Schleifscheibe mit dem Werkstück eingebracht wird. Da sich während des Schleifbetriebs der Schleifscheibendurchmesser durch Abrieb bzw. durch das Abrichten der Schleifscheibe verringert, sind verstellbare Kühlmitteldüsen bekannt, so dass die Position der Kühlmitteldüse an den Schleifscheibendurchmesser angepasst werden kann.

Bei Innenverzahnungsschleifmaschinen, bei denen nur wenig Bauraum im Bereich der Schleifscheibe zur Verfügung steht, werden dabei im Stand der Technik manuell verstellbare Kühlmitteldüsen eingesetzt, welche seitlich neben oder in radialer Richtung verlaufend über der Schleifscheibe angeordnet sind.

Aufgabe der vorliegenden Erfindung ist es, eine Innenverzahnungsschleifmaschine mit einer verstellbaren Kühlmitteldüse zur Verfügung zu stellen, welche einfacher zu handhaben ist und/oder welche den bei der Innenverzahnungsschleifmaschine vorhandenen Bauraum besser ausnutzt.

Erfindungsgemäß werden diese Aufgaben durch Innenverzahnungsschleifmaschinen gemäß Anspruch 1 bzw. 5 gelöst.

Die vorliegende Erfindung umfasst dabei in einem ersten Aspekt eine Innenverzahnungsschleifmaschine mit einem Schleifarm, an welchem eine Schleifspindel angeordnet ist, und mit einer verstellbaren Kühlmitteldüse. Erfindungsgemäß ist nun vorgesehen, dass die Kühlmitteldüse über einen Antrieb verstellbar ist. Durch die Verwendung eines Antriebs muss die Kühlmitteldüse nicht mehr manuell nachgestellt werden, sondern kann über den Antrieb dem sich verringernden Schleifscheibendurchmesser angepasst werden. In vorteilhafter Weise handelt es sich dabei um einen elektrischen Antrieb, über welchen die Verstellung der Kühlmitteldüse vorgenommen werden kann.

Weiterhin kann die Innenverzahnungsschleifmaschine eine Steuerung aufweisen, welche den Antrieb zum Verstellen der Kühlmitteldüse ansteuert und die Kühlmitteldüse nachstellt. Erfindungsgemäß kann so über die NC-Steuerung der Schleifmaschine die Nachstellung der Kühlmitteldüse erfolgen.

Vorteilhafterweise ist die Steuerung dabei so ausgestaltet, dass die Nachstellung der Kühlmitteldüse automatisch erfolgt, und dabei insbesondere automatisch während des Schleifbetriebes vorgenommen wird. Insbesondere kann die Nachstellung dabei durch die Steuerung anhand einer berechneten Größenänderung der Schleifscheibe erfolgen.

Alternativ oder zusätzlich kann die Nachstellung dabei durch die Steuerung anhand des in der Maschinensteuerung abgelegten Profils der Schleifscheibe erfolgen. Insbesondere können die gleichen Daten zur Form der Schleifscheibe, welche als Grundlage für die Bewegung des Schleifkopfes während des Schleifbetriebs herangezogen werden, erfindungsgemäß auch zur Nachstellung der Kühlmitteldüse verwendet werden.

Erfindungsgemäß kann weiterhin vorgesehen sein, dass die Kühlmitteldüse oberhalb der Schleifscheibe am Schleifarm angeordnet ist.

Bei der erfindungsgemäßen Innenverzahnungsschleifmaschine ist die Schleifspindel dabei an einem Schleifarm angeordnet, über welchen sie in Eintauchrichtung in das Werkstuck hineingefahren werden kann, um von Innen die Innenverzahnung des Werkstücks zu bearbeiten. Der Schleifarm erstreckt sich daher in Eintauchrichtung und definiert durch seine Länge die maximal mögliche Breite des Zahnrads, welche mit der Innenverzahnungsschleifmaschine geschliffen werden kann. Durch die erfindungsgemäße Anordnung der Kühlmitteldüse wird daher der am Schleifarm oberhalb der Schleifspindel ohnehin zur Verfügung stehende Bauraum genutzt, während auf die ansonsten im Bereich der Schleifspindel beengten Bauraumverhältnisse bei der Innenverzahnungsschleifmaschine Rücksicht genommen werden kann.

Der oberhalb der Schleifscheibe am Schleifarm vorhandene Bauraum macht dabei auch die Verwendung eines Antriebs für die Kühlmitteldüse besonders einfach.

Besonders vorteilhaft ist die Kühlmitteldüse einer erfindungsgemäßen Innenverzahnungsschleifmaschine über eine Linearführung verschieblich geführt sein.

Vorteilhafterweise ist dabei die Linearführung in der Schleifebene der Schleifscheibe angeordnet, d. h. die Verstellrichtung der Linearführung verläuft in einer Ebene, die senkrecht auf der Drehachse der Schleifspindel steht, wobei die Linearführung vorteilhafterweise in der durch die Schleifscheibe bzw. Schleifspindel definierten Ebene angeordnet ist. Gegenüber einer seitlichen Anordnung hat dies den Vorteil, dass das Kühlmittel besser auf den Schleifbereich aufgebracht werden kann und nur eine Kühlmitteldüse eingesetzt werden muss.

Weiterhin kann erfindungsgemäß vorgesehen sein, dass die Linearführung der Kühlmitteldüse eine Verdrehsicherung aufweist. Hierdurch wird verhindert, dass die Ausrichtung der Düse ungewollt verändert wird, ohne dass diese wie im Stand der Technik hierzu geklemmt werden müsste. In besonders vorteilhafter Weise kommt die Verdrehsicherung dabei dann zum Einsatz, wenn die Linearführung in der Schleifebene angeordnet ist, da hier aufgrund der zentralen Anordnung der Kühlmitteldüse beim Verstellen in Längsrichtung keine Änderung der Ausrichtung der Kühlmitteldüse benötigt wird.

Gemäß einem zweiten Aspekt umfasst die vorliegende Erfindung eine Innenverzahnungsschleifmaschine mit einem Schleifarm, an welchem eine Schleifspindel angeordnet ist, mit einer über eine Linearführung verstellbaren Kühlmitteldüse.

Erfindungsgemäß ist dabei vorgesehen, dass die Verstellrichtung der Linearführung gegenüber der Eintauchrichtung und/oder gegenüber einer zur Eintauchrichtung senkrechten Ebene geneigt ist. Vorteilhafterweise beträgt der Winkel der Verstellrichtung der Linearführung zu der zur Eintauchrichtung senkrechten Ebene dabei zwischen 5° und 40°. Dies ergibt eine bessere Kinematik bei der Nachstellung der Kühlmitteldüse. Insbesondere wird so die Kühlmitteldüse nicht nur in Eintauchrichtung bewegt, sondern auch in Eingriffsrichtung, und wird so besser an die sich mit der Größe der Schleifscheibe ändernde Position des Eingriffsbereichs der Schleifscheine angepasst werden.

Alternativ oder zusätzlich kann die Verstellrichtung der Linearführung tangential zum Umfang der Schleifscheibe verlaufen. Obwohl die Kühlmitteldüse einer radialen Größenänderung der Schleifscheibe angepasst werden soll, erlaubt eine solche Anordnung dennoch eine ausreichende Anpassung an die sich verändernde Schleifscheibe, und benötigt erheblich weniger Bauraum in radialer Richtung.

Besonders vorteilhaft ist dabei die tangential verlaufende Verstellrichtung der Linearführung gegenüber einer zur Eintauchrichtung senkrechten Ebene geneigt.

Weiterhin kann bei den oben beschriebenen Ausführungen gemäß dem zweiten Aspekt vorgesehen sein, dass die Verstellrichtung der Linearführung zum düsenseitigen Ende hin nach oben verläuft.

Vorteilhafterweise ist die Kühlmitteldüse weiterhin quer zur Verstellrichtung der Linearführung ausgerichtet. Insbesondere kann die Strahlmittelachse der Kühlmitteldüse dabei einen Winkel zwischen 45° und 135 ° aufweisen, weiter vorteilhaft zwischen 60 ° und 120 °, weiter zwischen 80° und 100°.

Alternativ oder zusätzlich kann bei der vorliegenden Erfindung vorgesehen sein, dass die Sprührichtung der Kühlmitteldüse zur Eintauchrichtung des Schleifkopfes in das Werkstück geneigt angeordnet ist, und zwar vorteilhafterweise in einem Winkelbereich zwischen 5° und 40°, wobei die Sprührichtung vorteilhafterweise nach vorne und unten zum Werkstück hin verläuft.

Der erste Aspekt der vorliegenden Erfindung kann dabei unabhängig vom zweiten Aspekt der vorliegenden Erfindung eingesetzt werden. Besonders bevorzugt werden jedoch beide Aspekte kombiniert eingese

tzt. Im folgenden werden nun vorteilhafte Weiterbildungen der vorliegenden Erfindung dargestellt, welche jeweils bei Schleifmaschinen gemäß beiden Aspekten zum Einsatz kommen können.

Dabei kann vorgesehen sein, dass die Kühlmitteldüse der erfindungsgemäßen Innenverzahnungsschleifmaschine an einem Rohr angeordnet ist, welches verschieblich in einer Führung geführt ist und gleichzeitig der Zuführung des Kühlmittels zur Düse dient.

Besonders bevorzugt ist dabei am Rohr eine Zahnstange angeordnet, welche mit einem Ritzel kämmt. Das Rohr dient damit neben der Führung der Kühlmitteldüse und der Zuführung des Kühlmittels als ein Schlitten eines Linearantriebs. Hierdurch kann auf kleinstem Bauraum eine zuverlässige Verstellung der Kühlmitteldüse erreicht werden. Das Ritzel wird dabei über einen Motor des Antriebs der Kühlmitteldüse angetrieben, beispielsweise über einen Elektromotor. Bei dem Ritzel kann es sich dabei um ein normales Zahnrad oder um ein Schneckenritzel handeln, so dass ein Schneckenantrieb erreicht wird.

Alternativ oder zusätzlich kann vorgesehen sein, dass die Führung des Rohres eine Verdrehsicherung aufweist. So verhindert die Führung des Rohres, dass das Rohr beim Verstellen der Position der Kühlmitteldüse zur Anpassung an den sich verändernden Radius der Schleifscheibe ungewollt verdreht wird.

Weiterhin kann erfindungsgemäß vorgesehen sein, dass das Rohr eine Öffnung aufweist, über welche es mit einem mit Kühlmittel gefüllten Raum in Verbindung steht, um die Kühlmitteldüse mit Kühlmittel zu versorgen, wobei das Rohr gegenüber dem mit Kühlmittel gefüllten Raum verschieblich ist. Hierdurch werden zur Zuführung des Kühlmittels zum Rohr keine bewegten Teile wie z. B. Schläuche benötigt. Insbesondere kann dabei vorgesehen sein, dass das der Kühlmitteldüse entgegengesetzte Ende des Rohrs offen ist und in den mit Kühlmittel gefüllten Raum mündet.

Erfindungsgemäß kann dabei weiterhin eine Dichtung vorgesehen sein, welche am Außenumfang des Rohres anliegt und den mit dem Kühlmittel gefüllten Raum abdichtet.

Weiterhin kann vorgesehen sein, dass die Linearführung des Rohres innerhalb des mit Kühlmittel gefüllten Raumes angeordnet ist. Ebenso kann vorgesehen sein, dass die Verdrehsicherung für das Rohr innerhalb des mit Kühlmittel gefüllten Raums angeordnet ist.

Weiterhin kann gemäß der vorliegenden Erfindung vorgesehen sein, dass das Ritzel des Antriebs in dem mit Kühlmittel gefüllten Raum angeordnet ist. Vorteilhafterweise ist dann auch die Zahnstange am Rohr in dem mit Kühlmittel gefüllten Raum angeordnet. Dabei kann der Motor außerhalb dieses Raumes liegen und die Welle zum Antrieb des Ritzels durch die Wand des Raumes geführt sein. All dies erlaubt eine besonders einfache Anordnung mit einem Minimum an Dichtungsaufwand und einem Minimum an Bauraum.

Die zuletzt beschriebene Ausführung der verstellbaren Kühlmitteldüse kann dabei nicht nur bei Innenverzahnungsschleifmaschinen, sondern allgemein bei Verzahnungsschleifmaschinen zum Einsatz kommen und dabei insbesondere auch bei Außenverzahnungsschleifmaschinen.

Die vorliegende Erfindung umfasst daher weiterhin eine Verzahnungsschleifmaschine mit einer Schleifspindel und mit einer verstellbaren Kühlmitteldüse, wobei die Kühlmitteldüse in einem Rohr angeordnet ist, welches der Zuführung des Kühlmittels zur Düse dient, wobei das Rohr eine Öffnung aufweist, über welche es mit einem mit Kühlmittel gefüllten Raum in Verbindung steht, um die Kühlmitteldüse mit Kühlmittel zu versorgen. Weiterhin ist dabei das Rohr gegenüber dem mit Kühlmittel gefüllten Raum verschieblich, wobei an dem Rohr eine Zahnstange angeordnet ist, welche mit einem Ritzel kämmt. Hierdurch kann der Antrieb zum Verstellen der Position der Kühlmitteldüse auf engstem Raum in die durch das Rohr zur Verfügung gestellte Linearführung integriert werden.

Vorteilhafterweise ist dabei das Ritzel des Antriebs in dem mit Kühlmittel gefüllten Raum angeordnet. In weiterhin vorteilhafter Weise ist auch die Zahnstange in dem mit Kühlmittel gefüllten Raum angeordnet.

Die Anordnung zur Verstellung der Kühlmitteldüse kann dabei wie oben bereits dargestellt ausgeführt sein. Insbesondere kann eine Verdrehsicherung für das Rohr vorgesehen sein.

Die zuletzt beschriebene Verzahnungsschleifmaschine kann dabei auch die weiteren, auf die Kühlmitteldüse und deren Anordnung bezogenen Merkmale, wie sie weiter oben beschrieben wurden, aufweisen. Insbesondere kann dabei die durch das Rohr gebildete Linearführung in der Schleifebene der Schleifmaschine angeordnet sein.

Weiterhin kann die Verstellrichtung der durch das Rohr gebildeten Linearführung tangential zum Umfang der Schleifscheibe verlaufen. Weiterhin kann die Kühlmitteldüse quer zur Verstellrichtung der Linearführung und damit zur Längsachse des Rohres ausgerichtet sein.

Weiterhin kann die Verstellrichtung der Linearführung gegenüber der Eintauchrichtung und gegenüber einer zur Eintauchrichtung senkrechten Ebene geneigt sein, wobei der Winkel zu der zur Eintauchrichtung senkrechten Ebene vorteilhafterweise zwischen 5° und 45° beträgt.

Weiterhin kann vorgesehen sein, dass die Verstellrichtung der Linearführung zur Düse hin nach oben geneigt ist.

Alternativ oder zusätzlich kann bei der vorliegenden Erfindung vorgesehen sein, dass die Sprührichtung der Kühlmitteldüse zur Eintauchrichtung des Schleifkopfes in das Werkstück geneigt angeordnet ist, und zwar vorteilhafterweise in einem Winkelbereich zwischen 5° und 40°, wobei die Sprührichtung vorteilhafterweise nach vorne und unten zum Werkstück hin verläuft.

Weiterhin kann das Rohr mit der Kühlmitteldüse oberhalb der Schleifscheibe am Schleifarm angeordnet sein.

In weiterhin vorteilhafter Weise weist auch die zuletzt beschriebene Verzahnungsschleifmaschine eine Steuerung auf, welche den Antrieb zum Verstellen der Kühlmitteldüse ansteuert und die Kühlmitteldüse nachstellt. Insbesondere ist diese Steuerung so ausgeführt, wie dies oben gemäß dem ersten Aspekt der Erfindung dargestellt wurde.

Bei der zuletzt beschriebenen Verzahnungsschleifmaschine kann es sich dabei selbstverständlich um eine Innenverzahnungsschleifmaschine handeln, wie sie oben näher beschrieben wurde. Ebenfalls kann es sich jedoch auch um eine Außenverzahnungsschleifmaschine handeln.

Neben den Verzahnungsschleifmaschinen, wie sie oben beschrieben wurden, umfasst die vorliegende Erfindung weiterhin eine Kühlmitteldüse mit einem Antrieb, wie sie oben beschrieben wurde. Insbesondere umfasst der Antrieb dabei ein Ritzel, welches mit einer auf einem Rohr angeordneten Zahnstange kämmt, wobei die Kühlmitteldüse an dem Rohr angeordnet ist und über dieses mit Kühlmittel versorgt wird. Vorteilhafterweise sind Kühlmitteldüse und Antrieb dabei so ausgeführt, wie dies weiter oben bereits dargestellt wurde. Insbesondere kann das Rohr eine Öffnung aufweisen, über welche es mit einem mit Kühlmittel gefüllten Raum in Verbindung steht, um die Kühlmitteldüse mit Kühlmittel zu versorgen. Weiterhin kann dabei das Rohr gegenüber dem mit Kühlmittel gefüllten Raum verschieblich sein.

Die vorliegende Erfindung kommt besonders bevorzugt bei Innenverzahnungsschleifmaschinen zum Einsatz, bei welchen die Schleifspindel ohne die Zwischenschaltung einer Drehachse am Schleifarm angeordnet ist und/oder bei welchen die Schleifspindel ohne die Zwischenschaltung einer Shiftachse am Schleifarm angeordnet ist und/oder wobei die Schleifspindel ohne die Zwischenschaltung einer in Eintauchrichtung verlaufenden Achse am Schleifarm angeordnet ist.

Insbesondere kommt die vorliegende Erfindung dabei besonders bevorzugt bei solchen Innenverzahnungsschleifmaschinen zum Einsatz, bei welchen die Schleifspindel starr am Schleifarm angeordnet ist und die zum Schleifen notwendigen Bewegungen bis auf die Drehbewegung der Schleifscheibe über eine Bewegung des gesamten Schleifarms erfolgen.

Die vorliegende Erfindung kann jedoch auch bei solchen Innenverzahnungsschleifmaschinen zum Einsatz kommen, bei welchen die Schleifspindel an einem bewegbaren, einen Schleifkopf bildenden Teil des Schleifarms angeordnet ist, der über eine oder mehrere Bewegungsachsen gegenüber dem Rest des Schleifarmes bewegbar ist. Vorteilhafterweise ist in diesem Fall die erfindungsgemäße verstellbare Kühlmitteldüse an dem bewegbaren Teil des Schleifarms angeordnet und wird damit mit der Schleifscheibe mitbewegt.

Besonders bevorzugt kommt die erfindungsgemäße Kühlmitteldüse jedoch bei Innenverzahnungsschleifmaschinen zum Einsatz, bei welchen der Schleifarm über Achsen bewegbar ist, welche außerhalb eines Radius eines zu bearbeitenden Werkstückes angeordnet sind. Weiterhin kann vorgesehen sein, dass der Schleifarm über eine Drehachse drehbar ist und/oder über eine erste Linearachse in Eintauchrichtung bewegbar ist und/oder über eine Shiftachse in Richtung der Drehachse der Schleifspindel verfahrbar ist und/oder über eine Linearachse in Eingriffsrichtung verfahrbar ist.

Die vorliegende Erfindung wird nun anhand von Ausführungsbeispielen sowie Zeichnungen näher dargestellt. Dabei zeigen:
- Figur 1:: ein erstes Ausführungsbeispiel eines Schleifarms einer erfindungsgemäßen Innenverzahnungsschleifmaschine mit verstellbarer Kühlmitteldüse, wobei sich die Kühlmitteldüse in einer ersten Position befindet,
- Figur 2:: das in Figur 1 gezeigte Ausführungsbeispiel, wobei sich die Kühlmitteldüse in einer zweiten Position befindet und
- Figur 3:: ein Ausführungsbeispiel einer erfindungsgemäßen Verzahnungsschleifmaschine mit dem erfindungsgemäßen Schleifarm.

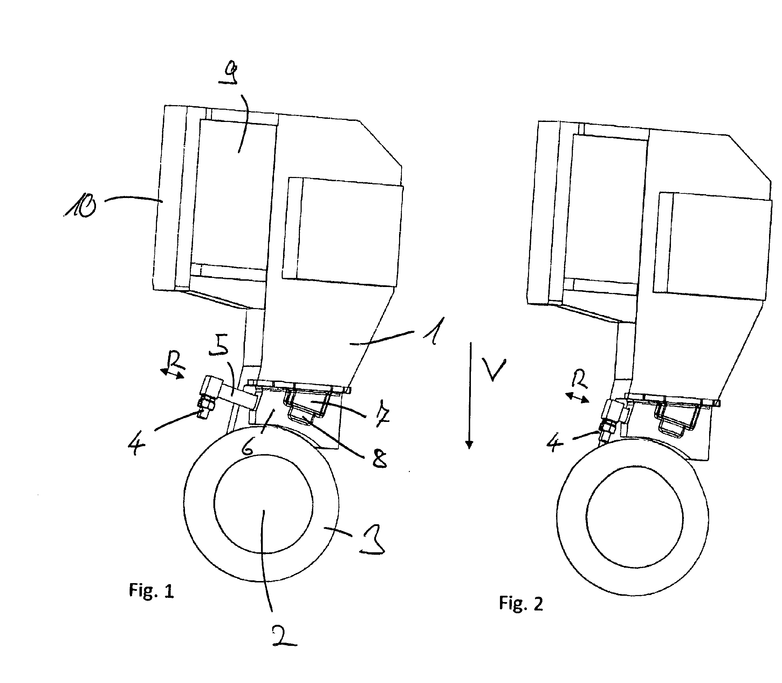

In den Figuren 1 und 2 ist ein erstes Ausführungsbeispiel einer erfindungsgemäßen Innenverzahnungsschleifmaschine gezeigt. Dabei ist ein Schleifarm 1 vorgesehen, an dessen unteren Ende eine Schleifspindel 2 mit daran eingespannter Schleifscheibe 3 angeordnet ist. Über den Schleifarm 1 kann die Schleifscheibe 3 in Eintauchrichtung V in den Innenbereich eines Werkstückes, welches mit einer Innenverzahnung versehen werden soll, eingeführt werden. In den Figuren 1 und 2 wäre das Werkstück dabei links neben der Schleifscheibe unterhalb des sich in horizontaler Richtung nach außen erstreckenden Gehäuseabschnittes 9 des Schleifarmes 1 angeordnet.

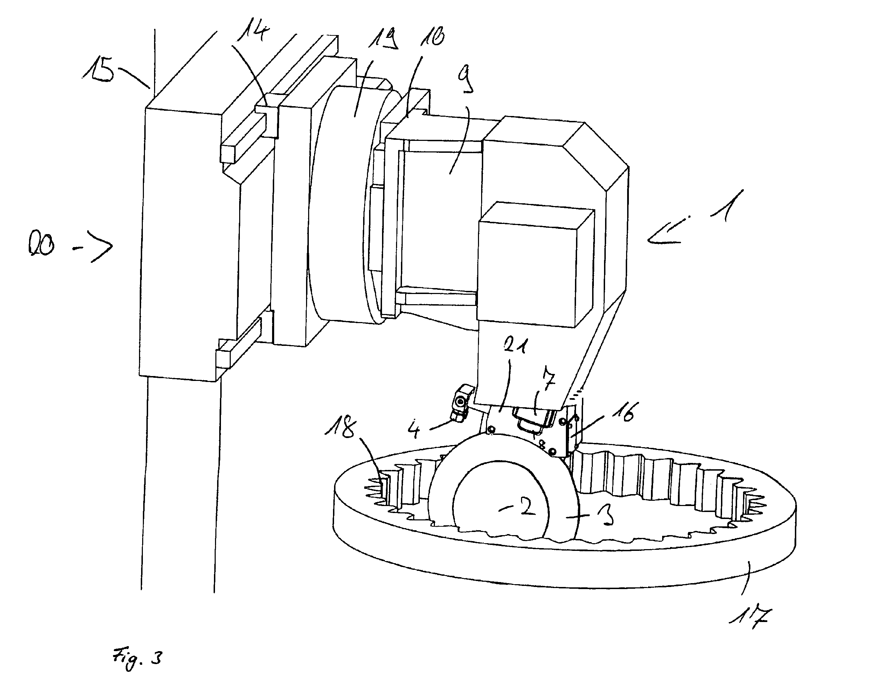

Im Ausführungsbeispiel ist die Schleifspindel 2 dabei starr am Schleifarm 1 angeordnet, so dass sämtliche Bewegungen zum Schleifen außer der Drehbewegung der Schleifscheibe 3 durch die Bewegung des gesamten Schleifarms vorgenommen werden. Hierzu ist der Schleifarm über die Verbindungsfläche 10 mit einem in Fig. 3 dargestellten Maschinenständer 20 verbunden, welcher die notwendigen Bewegungsachsen aufweist.

Im Ausführungsbeispiel liegen die Bewegungsachsen damit außerhalb des zu bearbeitenden Werkstücks 17 und könnten beispielsweise auch für die Herstellung von Außenverzahnungen mit einem anderen Schleifkopf eingesetzt werden. Die vorliegende Erfindung kann jedoch auch bei Innenverzahnungsschleifmaschinen mit einem speziellen Innenschleifkopf eingesetzt werden, welcher selbst über Bewegungsachsen verfügt.

Erfindungsgemäß weist die Innenverzahnungsschleifmaschine eine Kühlmitteldüse 4 auf, über welche das Kühlschmiermittel in die Bearbeitungszone gesprüht werden kann. Um die Position der Düse an den sich während des Schleifens verringernden Schleifscheibendurchmesser der Schleifscheibe 3 anzupassen, ist die Position der Kühlmitteldüse 4 dabei über eine Linearführung verstellbar.

Hierfür ist die Kühlmitteldüse 4 an einem Schlitten angeordnet, welche von einem Rohr 5 gebildet wird, das gleichzeitig der Kühlmittelzufuhr zur Düse 4 dient. Das Rohr 5 ist dabei linear in einem Gehäuse 6 verschiebbar. Weiterhin ist eine Verdrehsicherung für das Rohr 5 vorgesehen.

Am Rohr 5 ist innerhalb des Gehäuses 6 eine Zahnstange angeordnet, welche mit einem hier nur schematisch dargestellten Ritzel 8 kämmt. Das Ritzel 8 wird dabei über einen ebenfalls nur schematisch dargestellten Motor 7 angetrieben. Insbesondere steht das Ritzel dabei über ein Getriebe mit dem Motor in Verbindung. Durch Drehen des Ritzels kann der durch das Rohr 5 gebildete Schlitten linear verschoben werden. Als Ritzel kann dabei ein normales Zahnrad oder ein Schneckenritzel zum Einsatz kommen.

Der Antriebsmotor 7 zum Verstellen der Position der Kühlmitteldüse 4 wird dabei über die NC-Steuerung der Schleifmaschine angesteuert, welche so automatisiert die Nachstellung der Kühlmitteldüse vornehmen kann.

Weiterhin ist die Kühlmitteldüse dabei orthogonal zur Schleifspindelachse verfahrbar. Dabei ist die durch das Gehäuse 6 und das Rohr 5 gebildete Linearführung oberhalb der Schleifscheibe angeordnet, und zwar in der durch die Schleifscheibe 3 gebildeten Ebene. Die Verstellrichtung R der Linearführung ist gegenüber einer senkrecht auf der Eintauchrichtung V stehenden Ebene geneigt und im Wesentlichen tangential zum Umfang der Schleifscheibe 3 angeordnet.

Die Kühlmitteldüse 4 ist dabei in einem Winkel von 90° zur Verstellrichtung R der durch das Rohr 5 gebildeten Linearführung angeordnet. Weiterhin ist bei der vorliegenden Erfindung vorgesehen, dass die Sprührichtung der Kühlmitteldüse 4 zur Eintauchrichtung V des Schleifkopfes in das Werkstück geneigt angeordnet ist, und zwar vorteilhafterweise in einem Winkelbereich zwischen 5° und 40°.

Der in den Figuren nicht dargestellte Aufbau der Linearführung wird nun näher beschrieben:

Dabei ist in dem Gehäuse 21 eine Linearführung für das Rohr 5 vorgesehen, welche zudem eine Verdrehsicherung aufweist. Weiterhin endet das Rohr 5 rückseitig in einem Raum, welcher über eine Zuführungsleitung mit Kühlmittel befüllt wird. Hierdurch wird trotz der Verstellbarkeit des Rohres eine einfache Zuführung des Kühlmittels zum Rohr und vom Rohr zur Kühlmitteldüse 4 gewährleistet. Die Linearführung für das Rohr ist dabei im Bereich des mit Kühlmittel gefüllten Raums angeordnet, so dass lediglich eine einzige Dichtung zur Abdichtung des Rohres 5 gegenüber dem mit Kühlmittel gefüllten Raum benötigt wird.

Die Antriebseinheit zum Antrieb des Rohres ist dabei wie folgt mit der Linearführung kombiniert:

Die Zahnstange zum Bewegen des Rohres ist an dem Rohr 5 ebenfalls im Bereich des mit Kühlmittel gefüllten Raums angeordnet, so dass sich keine Dichtungsprobleme durch den Antrieb ergeben. Ebenso ist das Ritzel 8 des Antriebs in diesem Raum angeordnet. Vorteilhafterweise ist dabei für die Welle des Ritzels eine Drehdurchführung vorgesehen, so dass der Motor 7 außerhalb des mit Kühlmittel gefüllten Raums angeordnet werden kann. Der mit Kühlmittel gefüllte Raum ist dabei nach hinten durch eine Abdeckung 16 nach außen verschlossen.

Wie in Figur 3 gezeigt, ist der erfindungsgemäße Antrieb zum Verstellen der Kühlmitteldüse direkt oberhalb der Schleifscheibe am Schleifarm des Innenschleifkopfs angeordnet. Eine solche Verstelleinheit für die Kühlmitteldüse könnte jedoch auch für Außenverzahnungsschleifmaschinen zum Einsatz kommen, wenn dort ebenfalls eine besonders platzsparende Anordnung gewünscht ist.

In Figur 3 ist auch der weitere Aufbau der erfindungsgemäßen Innenverzahnungsschleifmaschine zu erkennen. Dabei ist der sich in Eintauchrichtung erstreckende Schleifarm 1 über den sich in Eingriffsrichtung erstreckenden Gehäuseabschnitt 9 mit einem Maschinenständer verbunden, an welchem Bewegungsachsen vorgesehen sind, welche die zum Erzeugen des gewünschten Schleifprofils notwendigen Bewegungen durchführen.

So ist eine lineare Bewegungsachse 15 vorgesehen, durch welche der Schleifarm in Eintauchrichtung bewegt werden kann. Weiterhin ist eine lineare Bewegungsachse 14 vorgesehen, durch welche der Schleifarm orthogonal zur Eintauchrichtung vershiftet werden kann. Weiterhin ist eine Drehachse 19 vorgesehen , um den Schleifarm zu verdrehen und so Schrägverzahnungen zu ermöglichen.

Ebenso ist eine weitere lineare Bewegungsachse vorgesehen, durch welche der Schleifarm in Eingriffsrichtung bewegt werden kann, um die Schleifscheibe mit dem Werkstück 17 in Eingriff zu bringen. Weiterhin ist eine Drehachse zum Drehen des Werkstücks vorgesehen.

## Patentansprüche

1. Innenverzahnungsschleifmaschine mit einem Schleifarm, an welchem eine Schleifspindel angeordnet ist, und mit einer verstellbaren Kühlmitteldüse,
**dadurch gekennzeichnet,**
**dass** die Kühlmitteldüse über einen Antrieb verstellbar ist.

2. Innenverzahnungsschleifmaschine nach Anspruch 1, mit einer Steuerung, welche den Antrieb zum Verstellen der Kühlmitteldüse ansteuert und die Kühlmitteldüse nachstellt.

3. Innenverzahnungsschleifmaschine nach Anspruch 1 oder 2, wobei die Kühlmitteldüse oberhalb der Schleifscheibe am Schleifarm angeordnet ist.

4. Innenverzahnungsschleifmaschine nach einem der vorangegangenen Ansprüche, wobei die Kühlmitteldüse über eine Linearführung verschieblich geführt ist, wobei die Linearführung vorteilhafterweise in der Schleifebene der Schleifscheibe angeordnet ist und/oder wobei die Linearführung eine Verdrehsicherung aufweist.

5. Innenverzahnungsschleifmaschine insbesondere nach Anspruch 4, mit einem Schleifarm, an welchem eine Schleifspindel angeordnet ist, und mit einer über eine Linearführung verstellbaren Kühlmitteldüse, **dadurch gekennzeichnet, dass** die Verstellrichtung der Linearführung gegenüber der Eintauchrichtung und/oder gegenüber einer zur Eintauchrichtung senkrechten Ebene geneigt ist, wobei der Winkel zu der zur Eintauchrichtung senkrechten Ebene vorteilhafterweise zwischen 5° und 40° beträgt und/oder die Verstellrichtung der Linearführung tangential zum Umfang der Schleifscheibe verläuft, wobei vorteilhafterweise die Verstellrichtung der Linearführung zur Düse hin nach oben verläuft und/oder und/oder die Kühlmitteldüse quer zur Verstellrichtung der Linearführung ausgerichtet ist.

6. Innenverzahnungsschleifmaschine nach einem der vorangegangenen Ansprüche, wobei die Kühlmitteldüse an einem Rohr angeordnet ist, welches verschieblich in einer Führung geführt ist und gleichzeitig der Zuführung des Kühlmittels zur Düse dient.

7. Innenverzahnungsschleifmaschine nach Anspruch 6, wobei am Rohr eine Zahnstange angeordnet ist, welche mit einem Ritzel kämmt und/oder wobei die Führung des Rohres eine Verdrehsicherung aufweist.

8. Innenverzahnungsschleifmaschine nach Anspruch 6 oder 7, wobei das Rohr eine Öffnung aufweist, über welche es mit einem mit Kühlmittel gefüllten Raum in Verbindung steht, um die Kühlmitteldüse mit Kühlmittel zu versorgen, wobei das Rohr gegenüber dem mit Kühlmittel gefüllten Raum verschieblich ist, wobei vorteilhafterweise das der Kühlmitteldüse entgegengesetzte Ende des Rohres offen ist und in den mit Kühlmittel gefüllten Raum mündet.

9. Innenverzahnungsschleifmaschine nach Anspruch 8, wobei das Ritzel des Antriebs in dem mit Kühlmittel gefüllten Raum angeordnet ist.

10. Verzahnungsschleifmaschine mit einer Schleifspindel und mit einer verstellbaren Kühlmitteldüse,
**dadurch gekennzeichnet,**
**dass** die Kühlmitteldüse an einem Rohr angeordnet ist, welches der Zuführung des Kühlmittels zur Düse dient, wobei das Rohr eine Öffnung aufweist, über welche es mit einem mit Kühlmittel gefüllten Raum in Verbindung steht, um die Kühlmitteldüse mit Kühlmittel zu versorgen, wobei das Rohr gegenüber dem mit Kühlmittel gefüllten Raum verschieblich ist und wobei an dem Rohr eine Zahnstange angeordnet ist, welche mit einem Ritzel kämmt, wobei vorteilhafterweise das Ritzel des Antriebs in dem mit Kühlmittel gefüllten Raum angeordnet ist.

11. Verzahnungsschleifmaschine nach Anspruch 10, mit den Merkmalen eines der Ansprüche 2, 3, 4 oder 5.

12. Kühlmitteldüse mit einem Antrieb für eine Schleifmaschine nach Anspruch 10 oder 11 oder für eine Innenverzahnungsschleifmaschine nach einem der vorangegangenen Ansprüche.
